# DEMANDE DE BREVET EUROPEEN

(11) **EP 2 381 520 A1**
(43) Date de publication de la demande: **26.10.2011**
(21) Numéro de dépôt: 11290098.0
(22) Date de dépôt: 18.02.2011
(51) Int. Cl.: H01M 8/00, H01M 8/06

(54) **Procédé de cogénération d'énergie mécanique-électrique et de chaleur**

(30) Priorité: 23.04.2010 FR 1001754
(71) Demandeur: IFP Energies nouvelles, 92852 Rueil-Malmaison Cedex (FR)
(72) Inventeur: Ambrosino, Jean-Louis, 69360 Ternay (FR); Guillou, Florent, 69360 Ternay (FR); Giroudiere, Fabrice, 69530 Orleinas (FR)

(57) **Abrégé**

La présente invention concerne un procédé de production d'énergie électrique ou mécanique et de chaleur à partir d'un carburant liquide comprenant:
- une étape de production d'un gaz de synthèse par vaporéformage dans une unité de vaporéformage (6),
- une étape de déshydratation du gaz de synthèse par condensation de l'eau contenue dans le gaz,
- une étape de transformation du gaz de synthèse déshydraté en énergie électrique et en chaleur,
- une étape de recyclage du gaz de synthèse non converti à l'étape de transformation du gaz de synthèse vers un bruleur (16) à hydrogène fournissant de l'énergie à l'unité de vaporéformage (6),
- une étape de recyclage de l'eau condensée obtenue lors de la déshydratation du gaz de synthèse vers l'unité de vaporéformage (6).

## Description

La présente invention concerne le domaine de la production de chaleur et d'énergie mécanique ou électrique, et plus particulièrement un procédé de cogénération de chaleur et d'énergie électrique autonome en eau.

La production de chaleur et d'énergie mécanique ou électrique dans un système de cogénération est connue. Ces systèmes contribuent en général à l'amélioration de l'efficacité énergétique des procédés. Les systèmes de cogénération ont des principes de fonctionnement multiples, parmi eux les schémas intégrant une pile à combustible, en tant qu'unité de conversion du gaz produit en énergie électrique ou mécanique, se distinguent particulièrement. En effet, les piles à combustibles permettent de générer dans un seul équipement de la chaleur et de l'électricité. L'utilisation de ce type d'équipement dans des installations de cogénération d'électricité et de chaleur nécessite de fournir au système :
- du carburant pour la pile, le plus souvent de l'hydrogène, pur ou en mélange,
- du comburant, le plus souvent de l'oxygène, pur ou en mélange,
- de l'eau, dans le cas le plus courant des piles à combustibles à électrolyte membrane polymère.

Lorsque ces installations sont implantées dans des zones bénéficiant de réseaux de transport, d'énergie et d'utilités développés, le problème qui se pose vient du fait que le coût de l'électricité dans ces zones est généralement faible et par conséquent la rentabilité et la viabilité de telles installations ne sont pas assurées. Il est donc nécessaire de trouver des solutions pour implanter ces installations là ou les réseaux de transport, d'énergie et d'utilités ne sont pas installés et où le prix de l'électricité est plus élevé. Plusieurs contraintes spécifiques d'autonomie doivent être prises en compte lors de l'utilisation de ces installations dans des zones sans réseaux de transport, d'énergie et d'utilités développés.
- L'alimentation en carburant:
   Une solution pour l'alimentation en carburant, dans le cas d'utilisation d'une pile à combustible, est d'alimenter directement en hydrogène pur, la pile à combustible, à partir d'un réseau ou d'un réservoir. Dans le cas d'une application isolée, c'est-à-dire dans le cas où l'installation est la seule installation nécessitant une alimentation en hydrogène, cela se fait obligatoirement par réservoir. Or, à ce jour, la fourniture d'un gaz comme l'hydrogène sous cette forme est complexe et coûteuse que ce soit sous forme liquéfiée ou à très haute pression. Cette solution n'est donc envisagée que pour des applications de niche où le coût de l'énergie n'est pas le facteur déterminant comme par exemple les applications spatiales. Une autre solution consiste à utiliser une pile à méthanol. Le méthanol est un carburant liquide facilement transportable qui pourra être utilisé directement par la pile. L'inconvénient de ces piles à méthanol est leur faible puissance et la toxicité de leur carburant ce qui les cantonnent à des applications de faible puissance comme des téléphones ou des ordinateurs portables. Enfin une autre solution est de maintenir l'utilisation d'une pile à combustible alimentée en hydrogène,
   mais dont l'hydrogène provient d'un carburant. De nombreuses solutions existent utilisant du méthane mais celui-ci étant gazeux, son utilisation en milieu isolé est difficile pour des raisons de transport et de stockage.

- L'alimentation en comburant :
   L'alimentation en comburant peut elle aussi se faire de différentes manières. Dans le cas des piles à combustibles à hydrogène, le comburant utilisé est de l'oxygène. Celui-ci peut être apporté pur, mais comme pour l'hydrogène le problème du transport et du stockage subsiste. La solution la plus couramment utilisée et compatible avec une application en milieu isolé est l'utilisation de l'oxygène de l'air.
- L'alimentation en eau:
   L'eau est nécessaire au bon fonctionnement de nombreuses piles à combustible et en particulier dans les piles dont l'électrolyte est constitué d'une membrane polymère (PEM), l'eau y facilitant le transport des espèces réactives. Dans le cas d'une application isolée, il n'est pas possible, pour des raisons économiques, d'utiliser une connexion à une source d'eau, que ce soit de l'eau de refroidissement ou de l'eau purifiée directement utilisable par la pile. Des études théoriques ont montré qu'il était possible de recycler l'eau produite par la pile dans le cas d'applications spatiales, de piles à méthanol, ou encore de piles type PEM avec ou sans production associée d'hydrogène.

Les solutions réellement utilisées pour le recyclage de l'eau ou du carburant non utilisé visent soit à dépenser des consommables pour économiser de l'énergie, soit à dépenser de l'énergie pour économiser des consommables. Cela se traduit par exemple par une solution de recyclage du carburant hydrogène non utilisé par la pile à combustible pour en améliorer l'autonomie, le transport de ce carburant étant assuré par de la vapeur recyclée comme le décrit la demande de brevet JP 2008004468. Les solutions existantes concernant l'eau se limitent au recyclage de l'eau en sortie de pile. Le recyclage peut se faire soit par refroidissement à l'air uniquement (décrit dans la demande de brevet US 2008226962), soit en utilisant un réseau d'eau de refroidissement (décrit dans la demande de brevet US 2006257699) ce qui permet d'être autonome en eau purifiée mais pas en eau de refroidissement, soit en préconisant le recyclage de l'eau en sortie de pile (décrit dans les demandes de brevets US 2008187800 et US 2008187789).

Dans le cas de la production du carburant par reformage d'un hydrocarbure liquide, la technique la plus utilisée est le reformage à la vapeur, que le fonctionnement soit, ou non, autotherme. Cette étape requiert également une quantité importante d'eau. Dans la plupart des installations industrielles fonctionnant en continu, cette eau, purifiée, est amenée par un réseau de transport. Mais le refroidissement à l'air pour condenser l'eau en phase vapeur impose des limites. En effet d'un point de vue énergétique, il comprend généralement un dispositif de ventilation du radiateur consommateur d'énergie, et d'un point de vue thermique, son efficacité est limitée par la température de l'air ambiant. Dans le cas d'une application isolée l'utilisation d'une telle installation est de plus très couteuse en terme d'équipement.

La présente invention a donc pour objet de pallier un ou plusieurs des inconvénients de l'art antérieur en proposant un dispositif de cogénération d'énergie mécanique ou électrique et de chaleur associant un reformeur de carburant carboné ou hydrocarboné avec une unité de conversion du gaz produit en énergie électrique ou mécanique, ledit dispositif pouvant fonctionner de manière autonome en terme d'alimentation en eau et en milieu isolé. Cette association permet également d'augmenter le rendement thermique de la cogénération par rapport aux dispositifs de l'art antérieur.

Pour cela la présente invention propose un procédé de production d'énergie électrique ou mécanique et de chaleur à partir d'un carburant liquide comprenant:
- une étape de production d'un gaz de synthèse par vaporéformage dans une unité de vaporéformage utilisant le carburant liquide et de l'eau, la chaleur nécessaire à cette étape étant apportée par un brûleur à hydrogène et par le gaz de synthèse produit,
- une étape de déshydratation du gaz de synthèse par condensation de l'eau contenue dans le gaz,
- une étape de transformation du gaz de synthèse déshydraté en énergie électrique et en chaleur,
- une étape de recyclage du gaz de synthèse non converti à l'étape de transformation du gaz de synthèse vers un bruleur à hydrogène fournissant de l'énergie à l'unité de vaporéformage,
- une étape de recyclage de l'eau condensée obtenue lors de la déshydratation du gaz de synthèse vers l'unité de vaporéformage.

Selon un mode de réalisation de l'invention, l'étape de transformation du gaz de synthèse produit un effluent gazeux appauvri en oxygène qui est condensé pour obtenir de l'eau.

Selon un mode de réalisation de l'invention, l'eau obtenue par condensation de l'effluent gazeux appauvri en oxygène est recyclée vers l'unité de vaporéformage.

Selon un mode de réalisation de l'invention, le brûleur produit un effluent gazeux qui est condensé pour obtenir de l'eau

Selon un mode de réalisation de l'invention, l'eau obtenue par condensation de l'effluent gazeux est recyclée vers l'unité de vaporéformage.

Selon un mode de réalisation de l'invention, l'étape de déshydratation est réalisée par un système aéroréfrigérant.

Selon un mode de réalisation de l'invention, le procédé comporte une étape de purification du gaz de synthèse obtenu a l'étape de vaporéformage.

Selon un mode de réalisation de l'invention, l'étape de purification du gaz de synthèse comprend:
- une réaction de conversion du monoxyde de carbone à l'eau haute température,
- une réaction de conversion du monoxyde de carbone à l'eau basse température,
- au moins une première étape d'oxydation préférentielle du monoxyde de carbone contenu dans le gaz de synthèse en dioxyde de carbone.

Selon un mode de réalisation de l'invention, lequel l'étape de purification comprend une deuxième étape d'oxydation préférentielle du monoxyde de carbone contenu dans le gaz de synthèse en dioxyde de carbone.

Selon un mode de réalisation de l'invention, l'étape de transformation du gaz de synthèse purifié est réalisée avec une pile à combustible.

Selon un mode de réalisation de l'invention, l'étape de déshydratation du gaz de synthèse est précédée d'une étape de refroidissement du gaz de synthèse

Selon un mode de réalisation de l'invention, l'étape de refroidissement est réalisée en deux étapes:
- une première étape au niveau d'un échangeur de chaleur par le gaz de synthèse déshydraté, circulant dans un conduit arrivant d'un réacteur flash,
- une seconde étape au niveau d'un autre échangeur de chaleur par un fluide circulant dans un conduit provenant du circuit de refroidissement secondaire.

Selon un mode de réalisation de l'invention, le procédé comprend une étape de refroidissement du gaz de synthèse réalisée entre la première et la deuxième étape d'oxydation préférentielle du monoxyde de carbone contenu dans le gaz de synthèse en dioxyde de carbone.

Selon un mode de réalisation de l'invention, le gaz de synthèse issu de la réaction de conversion du monoxyde de carbone à l'eau haute température est refroidi, au niveau d'un échangeur de chaleur par un effluent circulant dans un conduit arrivant d'un autre échangeur de chaleur pour être dans les conditions de la réaction de conversion du monoxyde de carbone à l'eau basse température.

Selon un mode de réalisation de l'invention, le gaz de synthèse issu de la réaction de conversion du monoxyde de carbone à l'eau basse température est refroidi, au niveau d'un échangeur de chaleur par un fluide chaud circulant dans un deuxième conduit provenant du circuit de refroidissement secondaire.

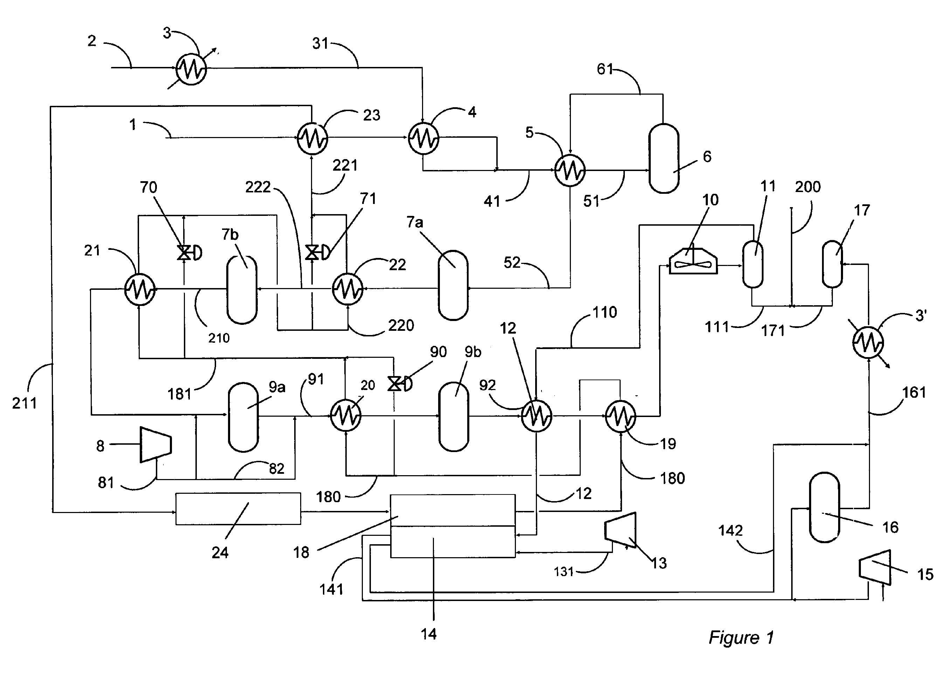

D'autres caractéristiques et avantages de l'invention seront mieux compris et apparaîtront plus clairement à la lecture de la description faite, ci-après, en se référant à la figure 1 annexée, donnée à titre d'exemple et représentant schématiquement le procédé de cogénération de chaleur et d'énergie mécanique ou électrique selon l'invention.

La présente invention consiste en un dispositif autonome de cogénération d'énergie mécanique ou électrique et de chaleur.

Ce dispositif associe un reformeur de carburant avec une unité de conversion du gaz produit en énergie électrique ou mécanique.

Le reformeur de carburant utilisé dans le cadre de l'invention est un reformeur classique bien connu de l'homme du métier. C'est le réacteur principal du système de reformage. II est alimenté en carburant sous forme gazeuse et en eau et/ou en air. La réaction se fait avec un catalyseur choisi en fonction du type de carburant utilisé et la technique de reformage. Il existe en effet au moins deux techniques de reformage selon le mélange à l'entrée:
- le vaporeformage: le carburant réagit avec l'eau,
- le reformage autotherme: le carburant réagit avec l'eau et l'air.

La technique choisie dépend de la charge traitée. Selon un mode de réalisation préférée de l'invention la technique utilisée est le vaporeformage. L'avantage du vaporeformage est qu'il ne nécessite pas de dilution à l'air.

Le carburant alimentant l'unité de conversion de gaz produit en énergie électrique est l'hydrogène. Cet hydrogène provient lui même d'un carburant peu ou pas polluant, peu onéreux et facilement transportable. Par exemple, un hydrocarbure liquide et notamment l'éthanol ou tout autre type de carburant liquide bien connu de l'homme du métier comme l'essence, le diesel ou encore le gaz de pétrole liquéfié (GPL). De plus dans un soucis de préserver le meilleur bilan carbone possible pour l'installation, ce carburant peut être issu de la biomasse, comme par exemple le bioéthanol. Ce carburant est transformé in-situ en hydrogène par reformage pour alimenter l'unité de conversion de gaz produit en énergie électrique sans étape de stockage. Ce dispositif est ainsi utilisable en milieu isolé.

L'unité de conversion du gaz produit en énergie électrique ou mécanique utilisée dans le cadre de l'invention peut être un moteur à combustion interne couplé à un dispositif de production d'électricité (comme par exemple un alternateur), une turbine couplée à un dispositif de production d'électricité, ou encore une pile à combustible, et par exemple une pile à combustible à électrolyte membrane polymère. La pile à combustible permet de transformer l'énergie chimique en énergie électrique ou mécanique directement.

Le caractère autonome du dispositif selon l'invention est notamment assuré par le fait qu'il n'est pas nécessaire d'alimenter le dispositif en eau du fait que la présente invention comprend un système de recyclage de l'eau réalisé avec des moyens de recyclage de l'eau. Le recyclage de l'eau est effectué en sortie de reformeur, ce qui favorise le rendement de la pile par concentration de l'hydrogène, en sortie de la pile et éventuellement, si la technologie de reformeur considérée l'autorise, en sortie du brûleur à hydrogène qui peut être intégré au réacteur ou indépendant du réacteur. En cas de présence d'un brûleur utilisant l'hydrogène non consommé par la pile, le fait de condenser l'eau en amont en améliore le rendement en concentrant le carburant, c'est à dire l'hydrogène. La principale difficulté, en particulier dans le cas où l'on souhaite développer une solution efficace dans une grande variété d'environnements, même dans des climats chauds, tout en respectant la volonté d'être autonome, c'est-à-dire de n'avoir que du carburant à fournir au système, est d'identifier dans le schéma de procédé des sources froides permettant de condenser l'eau. La présente invention, par une intégration thermique poussée entre le système de production de carburant, l'unité de conversion du carburant en chaleur et en électricité, et le réseau de régulation thermique, propose un schéma de procédé et des conditions opératoires permettant de répondre à ces difficultés.

Le présent dispositif peut ainsi opérer dans les régions tempérées (température diurne autour de 10 C) comme dans les régions chaudes (température diurne pouvant atteindre les 40 °C). Cette opérabilité dans différentes conditions est assurée par une innovation de la présente invention consistant à utiliser le flux de régulation thermique cogénéré comme source froide pour prérefroidir les fluides du procédé et parfois comme source chaude. Le refroidissement final et la condensation sont assurés par le réchauffage et l'évaporation des sources de carburant, d'eau et d'air ainsi que par refroidissement à l'air en appoint ou en finition.
Une autre spécificité de l'invention est d'associer le reformeur et l'unité de conversion dans la production de chaleur, celle-ci étant récupérée, par exemple sous la forme d'un réseau d'eau servant à la régulation thermique du système.

Une variante du fonctionnement du procédé selon la présente invention est illustrée sur la figure 1. Cette figure représente un schéma de procédé basé sur la présente invention et consistant à cogénérer de la chaleur, utilisée ensuite par un réseau de régulation thermique basse température (<90°C) et de l'énergie mécanique ou électrique à partir d'éthanol au moyen d'un vaporeformeur. Le vaporéformeur est suivi d'une chaîne de purification d'hydrogène composée de deux étage de réaction de conversation de monoxyde de carbone à l'eau (WGS pour Water Gas Shift selon la terminologie anglo-saxonne) haute et basse température suivis de deux étages d'oxydation préférentielle du monoxyde de carbone en dioxyde de carbone. La présence de cette chaîne de purification est rendue nécessaire pour abaisser la teneur en monoxyde de carbonne dans l'effluent du reformeur à des teneurs acceptables par la pile à combustible (PAC) à membrane polymère échangeuse d'ion (Polymer Electrolyte Membrane, PEM). La particularité de ces piles PEM est de comporter un électrolyte polymère, type Nafion® dont la fonction d'échange d'ion n'est assurée que lorsque celui-ci est saturé en eau.

Selon une autre variante de l'invention, non représentée sur la figure 1, lorsque l'unité de conversion utilisée dans le procédé n'est pas une pile, mais par exemple un moteur à combustion ou une turbine, la chaine de purification n'est plus nécessaire. Le procédé ne comporte ainsi pas d'étape de purification. Le flux (52) provenant du vaporeformeur passe dans ce cas dans le moteur ou turbine sans passer par l'unité de purification.

La charge envoyée au vaporéformeur (6) est composée d'éthanol circulant dans le conduit (1) d'arrivée d'éthanol et d'eau circulant dans le conduit (2) d'arrivée d'eau. L'eau est vaporisée, au niveau d'un premier échangeur de chaleur (3, 3') au contact des fumées du brûleur (16) après que celles-ci aient fourni de la chaleur au vaporéformeur (6). Sur la figure 1 le brûleur est disposé éloigné des échangeurs ou du réacteur de vaporeformage, mais il est possible que l'ensemble soit sous la forme réacteur-échangeur avec un brûleur à hydrogène intégré). L'eau circule ensuite dans le conduit (31) d'eau vaporisée. Parallèlement, l'éthanol est préchauffé au contact d'un fluide chaud arrivant par un premier conduit (221) provenant du circuit de refroidissement (18) via un deuxième échangeur de chaleur (23) pour être ensuite vaporisé, au contact de la vapeur chaude circulant dans le conduit (31) d'eau vaporisée, via un troisième échangeur de chaleur (4). Le mélange eau-éthanol circulant dans le conduit (41) d'eau-éthanol est surchauffé au niveau d'un quatrième échangeur de chaleur (5) par les effluents du vaporéformeur (6) circulant dans le conduit (61) arrivant du vaporéformeur (6) avant d'y entrer par le conduit (51) arrivant au vaporéformeur. La charge eau-éthanol est convertie à haute température dans le vaporéformeur (6) en un gaz de synthèse, circulant dans le conduit (61) arrivant du vaporéformeur (6), riche en hydrogène et comportant une certaine quantité de monoxyde de carbone. Cette quantité dépend de la charge traitée et des conditions de fonctionnement (température, pression, rapport vapeur/carbone) qui détermine la composition de l'effluent à l'équilibre thermodynamique. Par exemple dans le cas de l'éthanol avec un reformeur fonctionnant à 750°C à 0,42 MPa avec un rapport vapeur sur carbone de 2,2 on a une composition de 49% H₂ , 12% CO et 29% H₂O, pour les produits majoritaires. La réaction de conversion est endothermique, la chaleur nécessaire est apportée par le brûleur (16) de l'hydrogène ou gaz de synthèse non converti par la pile. Le gaz de synthèse chaud est refroidi, aux conditions de la réaction de conversion du monoxyde de carbone à haute température (WGS HT), c'est à dire à 300°C, qui à lieu dans un premier réacteur (7a), par la charge vaporisée circulant dans le conduit (41) d'eau-éthanol, pour abaisser une première fois la teneur en monoxyde de carbone du gaz de synthèse qui circule dans le conduit (52) arrivant du quatrième échangeur de chaleur (5). La réaction WGS HT est exothermique, l'effluent de la réaction WGS HT est refroidi, au niveau d'un cinquième échangeur de chaleur (22) par l'effluent circulant dans le conduit (220) arrivant d'un sixième échangeur de chaleur (21) pour être dans les conditions de la réaction de conversion du monoxyde de carbone basse température (WGS BT), c'est à dire à 150°C, qui a lieu dans un deuxième réacteur (7b). La réaction de WGS BT est exothermique, les effluents de la réaction WGS BT circulant dans le conduit (210) provenant du deuxième réacteur (7b) sont refroidis par le fluide chaud circulant dans un deuxième conduit (181) provenant du circuit de refroidissement secondaire (18) au niveau du sixième échangeur de chaleur (21). Les réacteur (7a, 7b) peuvent par exemple être en lit fixe, avec par exemple le catalyseur fixé sur un monolithe en céramique pour minimiser les pertes de charge. La réaction de WGS n'est pas suffisante pour descendre aux spécifications en monoxyde de carbone de toutes les piles à combustibles PEM (PAC PEM), on procède donc ensuite à des étapes d'oxydation préférentielle dans un premier réacteur d'oxydation préférentielle (9a) et dans un deuxième réacteur d'oxydation préférentielle (9b) pour abaisser au maximum la teneur en monoxyde de carbone du gaz de synthèse riche en hydrogène. L'oxydation préférentielle est réalisé au contact d'un catalyseur en présence d'air arrivant par les conduit (81,82) provenant du compresseur (8). La réaction étant exothermique, l'effluent circulant dans le conduit (91) provenant du premier réacteur d'oxydation préférentielle (9a) est refroidi par un septième échangeur de chaleur (20) par le fluide chaud circulant dans le conduit (180) provenant du circuit de refroidissement secondaire (18). Une deuxième étape d'oxydation préférentielle réalisée dans le deuxième réacteur d'oxydation préférentielle (9b) achève le traitement du d'oxydation du monoxyde de carbone. L'effluent circulant dans le conduit (92) provenant du deuxième réacteur d'oxydation préférentielle (9b) est lui aussi refroidi :
- une première fois au niveau d'un huitième échangeur de chaleur (12) par le gaz de synthèse refroidi et pauvre en eau, circulant dans le conduit (110) arrivant du réacteur flash (11), qu'il amène à la température de travail de la pile,
- une seconde fois au niveau du neuvième échangeur de chaleur (19) par le fluide circulant dans un troisième conduit (180) provenant du circuit de refroidissement secondaire (18).

Le refroidissement se fait donc en deux étapes, une première étape au niveau du huitième échangeur de chaleur (12) et une deuxième étape au niveau du neuvième échangeur de chaleur (19).

Un système aéroréfrigérant (10) disposé après le neuvième échangeur de chaleur (19) réalise un dernier refroidissement dans le but de refroidir suffisamment le gaz de synthèse purifié circulant dans le conduit (92) provenant du deuxième réacteur d'oxydation préférentielle (9b) pour récupérer l'eau par simple flash dans le réacteur flash (11). Le gaz déshydraté circulant dans le conduit (110) arrivant du réacteur flash (11) est ensuite réchauffé par l'effluent circulant dans le conduit (92) arrivant du deuxième réacteur d'oxydation partielle (9b). La PAC (14) est ainsi alimentée par de l'air comprimé à la pression du procédé, circulant dans le conduit (131) arrivant du compresseur (13), et par le gaz de synthèse déshydraté circulant dans le conduit (121) arrivant du huitième échangeur de chaleur (12). La PAC (14) produit ainsi de l'énergie électrique et de la chaleur. La chaleur est évacuée par le circuit de refroidissement secondaire (18) vers le réseau de régulation thermique formé par les conduits (180, 181 et 221).

Pour fonctionner, la PAC (14) consomme une partie de l'hydrogène du gaz de synthèse et l'oxygène de l'air. Il en résulte de l'eau que l'on retrouve gazeuse dans les effluents de la pile. L'effluent gazeux contenant l'hydrogène non consommé par la pile, circulant dans le premier conduit (141) provenant de la pile (14), est envoyé dans un brûleur (16) fournissant de l'énergie au vaporéformeur (6). L'effluent circulant dans le conduit (161) provenant du brûleur (16) est ensuite réuni avec l'effluent gazeux appauvri en oxygène de la pile, circulant dans le deuxième conduit (142) provenant de la pile (14) pour être condensé par l'eau (2) de la charge et ainsi récupérer l'eau par simple flash dans le réacteur flash (17). L'eau condensée circulant dans les conduits (111 et 117) provenant réciproquement des réacteurs flash (11 et 17) est recyclée (200) en entrée du système par le conduit (2) et suffit au fonctionnement de l'unité, assurant l'autonomie en eau du système.

Pour ce qui est du réseau de régulation thermique formé par les conduits (180, 181 et 221), il provient du circuit de refroidissement secondaire (18) à la température du procédé. Dans un premier temps il sert de source froide pour assurer le refroidissement intermédiaire sur l'effluent de l'oxydation partielle via le neuvième échangeur de chaleur (19). Le fait de se servir du réseau de régulation thermique comme source froide à l'avantage que chaque étape contribue à alimenter le réseau en chaleur comme les étapes (20), (21) et (22). Pour chacune de ces étapes ce qui importe c'est de réguler la température du gaz de régulation thermique en fonction de la chaleur que l'on souhaite prélever. Cette modulation est rendue possible par la présence de by-pass (70, 71 et 90) permettant pour tout ou partie de contourner les échangeurs de chaleurs (20), (21) et (22). Le réseau de régulation thermique est utilisé aussi comme source chaude pour préchauffer la charge d'éthanol circulant dans le conduit (1), par l'intermédiaire du deuxième échangeur de chaleur (23), puis sort du procédé en circulant dans le conduit (211) provenant du deuxième échangeur de chaleur (23) vers l'utilisateur (24) qui va consommer la chaleur, par exemple dans un système de chauffage domestique, ou industriel comme pour le séchage du bois. L'utilisateur restitue le flux du réseau de régulation thermique refroidi au procédé au niveau du circuit de refroidissement secondaire de la pile.

Les exemples suivant illustrent la présente invention.

### Exemples:

### Présentation générale du procédé utilisé dans les exemples

On considère un reformeur d'éthanol associé à une pile à combustible dans le but de faire de la cogénération de chaleur et d'électricité.

Le dimensionnement de l'ensemble vise la production de 5 kilowatts électriques (kWe), la production de chaleur exprimée en kilowatts thermiques (kWth) est réalisée sur le circuit de refroidissement secondaire de la pile à combustible ou selon le mode préféré de l'invention est réalisée à la fois sur le circuit de refroidissement secondaire de la pile et sur les emplacements excédentaires en chaleur du procédé de reformage. En effet, la réaction de reformage est endothermique, elle se produit à haute température et permet la récupération de chaleur sur les fumées refroidies. Par ailleurs le procédé comporte des réaction exothermiques telles que les réaction de conversion du monoxyde de carbone et les réaction d'oxydation partielles qui nécessitent de maintenir la température dans une fenêtre limité par les plages de fonctionnement des catalyseurs des réaction de conversion du monoxyde de carbone, cela fournit une chaleur à plus haute température que celle de fonctionnement de la pile et c'est ce qui rend l'intégration intéressante.

Quel que soit l'exemple considéré, la production de l'hydrogène nécessaire à la production de 5 kWe par la pile correspond à une consommation de 1,4 kg/h d'éthanol. De la même façon, on doit apporter 2,46 kg/h d'eau pour convertir ce flux d'éthanol en gaz de synthèse.

La composition du gaz de synthèse riche en hydrogène en sortie du reformeur :

| composé | fraction molaire |
|---|---|
| H₂O | 0,177 |
| N₂ | 0,018 |
| CO₂ | 0,205 |
| H₂ | 0,596 |
| CH₄ | 0,004 |

Sur ce flux l'eau est condensée à une température à 10 C° au dessus de la température ambiante dans le cas où l'on ne refroidit qu'avec un aéroréfrigérant (A1) ou à 5°C au dessus de la température ambiante dans le cas où l'on effectue le refroidissement du gaz de synthèse à la fois par le réseau de régulation thermique, un aéroréfrigérant (A2) et un échange avec la charge liquide non encore introduite dans le système et qui est elle aussi, comme l'air ambiant, considérée à température ambiante.

Le gaz appauvri en eau et riche en hydrogène (H₂) est envoyé à la pile comme combustible. Tout l'hydrogène n'est pas consommé. Le reste d'hydrogène est envoyé dans un brûleur pour fournir de la chaleur au vaporeformage. L'eau produite dans la pile et dans le brûleur est recyclable, soit au moyen d'un simple aérorefrigérant (B1), soit au moyen d'un aéroréfrigérant (B2) qui suit le réchauffage et la vaporisation de l'eau introduite en entrée du reformeur par les fumées de combustion.

Les deux possibilités sans et avec intégration du reformeur dans le réseau de chauffage-refroidissement sont présentées respectivement dans les exemples 1 et 2.

### Exemple 1 comparatif:

Dispositif de cogénération associant un reformeur d'éthanol et une pile à combustible de type PEM sans intégration du reformeur au réseau de régulation thermique.

### Bilan électrique

Quantité d'électricité produite par la pile : 4,97 kWe
Autoconsommation de l'ensemble : 1,08 kWe
Production électrique nette : 3,89 kWe

### Bilan thermique

Chaleur récupérable sur le circuit de refroidissement secondaire de la pile, soit la chaleur récupérée telle que l'eau du circuit de refroidissement secondaire sort de la pile à 85°C et revient après récupération de la chaleur à 80°C.
Chaleur récupérable : 3,31 kWth Échange thermique au niveau des aéroréfrigérants (air à 40°C) :
Aéroréfrigérant A1 : 0.756 kW
Aéroréfrigérant B1 : 3,09 kW
Quantité d'eau recyclable: dans le cas à 40°C, on recycle 2,44 kg/h d'eau.

### Exemple 2 selon l'invention:

Dispositif de cogénération associant un reformeur d'éthanol et une pile à combustible de type PEM avec intégration du reformeur au réseau de régulation thermique, selon l'invention.

### Bilan électrique

Quantité d'électricité produite par la pile : 4,97 kWe
Autoconsommation de l'ensemble : 1,08 kWe
Production électrique nette : 3,89 kWe

### Bilan thermique

Chaleur récupérable sur le circuit de refroidissement secondaire de la pile, soit la chaleur récupérée telle que l'eau du circuit de refroidissement secondaire sort de la pile à 85°C et revient après récupération de la chaleur à 80°C.
Chaleur récupérable : 3,96 kWth Échange thermique au niveau des aéroréfrigérants (air à 40°C):
Aéroréfrigérant A2 : 0.640 kW
Aéroréfrigérant B2 : 1,34 kW
Quantité d'eau recyclable : dans le cas à 40 °C, on recycle 2,84 kg/h d'eau.

Il résulte de l'intégration du reformeur dans l'exemple selon l'invention un gain sur l'énergie thermique récupérée jusqu'à 19 % par rapport à l'exemple n'intégrant pas le reformeur comme source de chaleur pour le système. De plus la quantité d'eau recyclée est supérieure de 15 % à la quantité d'eau nécessaire au bon fonctionnement de l'unité lorsque l'on se conforme au schéma décrit par l'invention. On note enfin que l'énergie à dissiper sur l'aéroréfrigérant B2 est nettement moindre à celle dissipée sur B1.

La présente invention ne doit pas être limitée aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications jointes.

## Revendications

1. Procédé de production d'énergie électrique ou mécanique et de chaleur à partir d'un carburant liquide comprenant:
- une étape de production d'un gaz de synthèse par vaporéformage dans une unité de vaporéformage (6) utilisant le carburant liquide et de l'eau, la chaleur nécessaire à cette étape étant apportée par un brûleur (16) à hydrogène et par le gaz de synthèse produit,
- une étape de déshydratation du gaz de synthèse par condensation de l'eau contenue dans le gaz,
- une étape de transformation du gaz de synthèse déshydraté en énergie électrique et en chaleur,
- une étape de recyclage du gaz de synthèse non converti à l'étape de transformation du gaz de synthèse vers un bruleur (16) à hydrogène fournissant de l'énergie à l'unité de vaporéformage (6),
- une étape de recyclage de l'eau condensée obtenue lors de la déshydratation du gaz de synthèse vers l'unité de vaporéformage (6).

2. Procédé de production d'énergie électrique ou mécanique et de chaleur selon la revendication 1 dans lequel l'étape de transformation du gaz de synthèse produit un effluent gazeux appauvri en oxygène qui est condensé pour obtenir de l'eau.

3. Procédé de production d'énergie électrique ou mécanique et de chaleur selon la revendication 2 dans lequel l'eau obtenue par condensation de l'effluent gazeux appauvri en oxygène est recyclée vers l'unité de vaporéformage (6).

4. Procédé de production d'énergie électrique ou mécanique et de chaleur selon une des revendications 1 à 3 dans lequel le brûleur produit un effluent gazeux qui est condensé pour obtenir de l'eau.

5. Procédé de production d'énergie électrique ou mécanique et de chaleur selon la revendication 4 dans lequel l'eau obtenue par condensation de l'effluent gazeux est recyclée vers l'unité de vaporéformage (6).

6. Procédé de production d'énergie électrique ou mécanique et de chaleur selon une des revendications 1 à 5 dans lequel l'étape de déshydratation est réalisée par un système aéroréfrigérant (10).

7. Procédé de production d'énergie électrique ou mécanique et de chaleur selon une des revendications 1 à 6 comportant une étape de purification du gaz de synthèse obtenu a l'étape de vaporéformage.

8. Procédé de production d'énergie électrique ou mécanique et de chaleur selon la revendication 7 dans lequel l'étape de purification du gaz de synthèse comprend:
- une réaction de conversion du monoxyde de carbone à l'eau haute température,
- une réaction de conversion du monoxyde de carbone à l'eau basse température,
- au moins une première étape d'oxydation préférentielle du monoxyde de carbone contenu dans le gaz de synthèse en dioxyde de carbone.

9. Procédé de production d'énergie électrique ou mécanique et de chaleur selon l'une des revendications 7 à 8 dans lequel l'étape de purification comprend une deuxième étape d'oxydation préférentielle du monoxyde de carbone contenu dans le gaz de synthèse en dioxyde de carbone.

10. Procédé de production d'énergie électrique ou mécanique et de chaleur selon une des revendications 1 à 9 dans lequel l'étape de transformation du gaz de synthèse purifié est réalisée avec une pile à combustible (14).

11. Procédé de production d'énergie électrique ou mécanique et de chaleur selon une des revendications 1 à 10 dans lequel l'étape de déshydratation du gaz de synthèse est précédée d'une étape de refroidissement du gaz de synthèse.

12. Procédé de production d'énergie électrique ou mécanique et de chaleur selon la revendication 11 dans lequel l'étape de refroidissement est réalisée en deux étapes:
- une première étape au niveau d'un échangeur de chaleur (12) par le gaz de synthèse déshydraté, circulant dans un conduit (110) arrivant d'un réacteur flash (11),
- une seconde étape au niveau d'un autre échangeur de chaleur (19) par un fluide circulant dans un conduit (180) provenant du circuit de refroidissement secondaire (18).

13. Procédé de production d'énergie électrique ou mécanique et de chaleur selon une des revendications 9 à 12 comprenant une étape de refroidissement du gaz de synthèse réalisée entre la première et la deuxième étape d'oxydation préférentielle du monoxyde de carbone contenu dans le gaz de synthèse en dioxyde de carbone.

14. Procédé de production d'énergie électrique ou mécanique et de chaleur selon une des revendications 8 à 13 dans lequel le gaz de synthèse issu de la réaction de conversion du monoxyde de carbone à l'eau haute température est refroidi, au niveau d'un échangeur de chaleur (22) par un effluent circulant dans un conduit (220) arrivant d'un autre échangeur de chaleur (21) pour être dans les conditions de la réaction de conversion du monoxyde de carbone à l'eau basse température.

15. Procédé de production d'énergie électrique ou mécanique et de chaleur selon une des revendications 8 à 14 dans lequel le gaz de synthèse issu de la réaction de conversion du monoxyde de carbone à l'eau basse température est refroidi, au niveau d'un échangeur de chaleur (21) par un fluide chaud circulant dans un deuxième conduit (181) provenant du circuit de refroidissement secondaire (18).
